(19) Europäisches Patentamt
European Patent Office
Office européen des brevets

(11) EP 4 039 749 A1

(12) EUROPEAN PATENT APPLICATION

(43) Date of publication:
**10.08.2022 Bulletin 2022/32**

(21) Application number: **21020051.5**

(22) Date of filing: **04.02.2021**

(51) International Patent Classification (IPC):
***C08L 83/04*** *(2006.01)* ***B29C 64/40*** *(2017.01)*
***C08L 71/02*** *(2006.01)*

(52) Cooperative Patent Classification (CPC):
(C-Sets available)
**B33Y 70/10; B29C 64/106; B29C 64/30; B29C 64/40; B33Y 10/00; B33Y 40/20; C08L 83/04**

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Elkem Silicones France SAS**
**69003 Lyon (FR)**

(72) Inventor: **Frances, Jean-Marc**
**69330 MEYZIEU (FR)**

(74) Representative: **Mekki, Boualem**
**Elkem Silicones France SAS**
**9, rue Spécia**
**69190 Saint-Fons (FR)**

# (54) A METHOD OF ADDITIVE MANUFACTURE OF A THREE-DIMENSIONAL ARTICLE MADE OF A CURED MATERIAL AND A GEL LIKE SUPPORT FOR USE IN ADDITIVE MANUFACTURING

(57) The invention relates to a method for the additive manufacturing of a cured elastomer article. In particular, the invention relates to a method for the additive manufacturing of a 3-dimensional cured material and a support using a 3D printer.

EP 4 039 749 A1

(52) Cooperative Patent Classification (CPC): (Cont.)

C-Sets
**C08L 83/04, C08L 83/00, C08L 83/00,**
**C08L 83/00, C08L 83/00, C08K 3/36, C08K 5/56**

## Description

### Technical field

The present disclosure relates to a method of additive manufacture of a three-dimensional article made of a cured material using a 3D printer and a gel-like support material, and also relates to a new gel-like support material useful for additive manufacturing.

### Background of the invention

Three-dimensional (3D) printing, is a process in which material is deposited, joined or solidified under computer control to create a three-dimensional obj ect with material being added together layer by layer. Indeed, additive manufacturing techniques covers different technologies in which materials are accumulated layer by layer via specific techniques such as extrusion, sintering, melting, photopolymerisation, jetting, lamination and deposition. In particular, extrusion-based printing is also known as a nozzle-based deposition system and relies on a computer-controlled manufacturing method which deposit materials layer by layer through nozzles to create a three-dimensional structure. A part material is extruded through an extrusion nozzle and is deposited on a substrate. The extruded part material combines to previously deposited material and solidifies upon curing reaction when suitable precursors of materials are used. The position of the print head relative to the substrate is then incremented along a z-axis and the process is then repeated to form a 3D part according to a preset digital representation.

However, some manufacturing processes which starts from the bottom of an object and carries on in a layer-by-layer manner to the top leads to problems for printing overhangs which are geometric shapes in a 3D model that extends outwards and beyond the previous layer and which are difficult to print since there is no supporting structure beneath them.

Indeed, in order to print a 3D article made from a curable composition precursor of a material, like an article with a height of at least 5 cm, overhanging structures or cavities, it is necessary to use a support during the additive manufacturing method to aid in preventing collapse during the printing process.

Indeed, supports are vital for preventing distortion and collapse within a part, among other uses. Supports can help to prevent part deformation, secure a part to the printing bed and ensure that parts are attached to the main body of the printed part.

For example, patent application US2015/0028523 discloses a method for printing a 3D part with an additive manufacturing system using a support material comprising a polyglycolic acid polymer. However, it is necessary to heat the support material at a very high temperature (more than 150°C) to print it.

Patent application US20180036953 describes an additive manufacturing process of 3D moldings using a supportive material composition comprising A) at least one poly ether, B) at least one particulate rheological additive, and C) optionally other additional substances. Nevertheless, this method requires the use of an organic solvent (polyether) and the composition does not seem to be reusable.

Patent application WO2020/127882 describes a method for the additive manufacturing of a silicone elastomer article and a support using a 3D printer characterized in that said support material composition comprises:

- between 3 wt. % and 30 wt. % of at least one nanoclay, and
- at least 50 wt. % of water, preferably demineralized or distilled water

However, the main drawback of the support materials is that shrinkage of the printed silicone elastomer is observed especially under the effect of heating or during a long print lasting several hours.

As these methods still have some drawbacks, there is a need to provide an improved method to 3D print of a three-dimensional article made of a cured material and having a complex shape.

Consequently, an essential objective of the present invention is to provide a method of additive manufacture of a three-dimensional article made of a cured material and having a complex shape using a 3D printer and a gel-like support material.

Another essential objective of the present invention is to provide a new gel-like support material useful for additive manufacturing.

Another essential objective of the present invention is to provide a method for the additive manufacturing of a three-dimensional article made of a cured material wherein the used support can be easily removed.

Another essential objective of the present invention is to provide a method for the additive manufacturing of a three-dimensional article made of a cured material which is easy to implement.

Another essential objective of the present invention is to provide a method for the additive manufacturing of a three-dimensional article made of a cured material, wherein the support can be recycled.

## Summary

These objectives, among others, are achieved by the present invention which relates to a gel-like support material **A** useful for an additive manufacturing method, the material being prepared by mixing components of a composition **V** comprising:

(a) for 100 parts by weight of at least one organic compound having at least two hydroxyls groups bound to carbon atoms with the proviso that at least one hydroxyl group is a secondary alcohol,
(b) from 1 part to 50 parts by weight, and preferably from 10 parts to 40 parts by weight, of at least one nanoclay,
(c) from 1 part to 100 parts by weight, and preferably from 10 parts to 80 parts by weight, of water,
(d) from 0 part to 100 parts by weight of at least one water soluble or water dispersible polymer, and
(e) from 0 part to 20 parts by weight of at least one additive.

The gel-like support material **A** shows a low level of water loss enabling its use in long lasting 3D printing method. The gel-like support material **A** has good thixotropic properties and is therefore useful in 3D printing. In particular, it avoids the collapse or deformation of a printed three-dimensional article made of a cured material which allow the printing of an article with a complex shape, like overhangings and cavities, and can thus be printed using this method.
Moreover, the gel-like support material **A** can be easily removed, for example by dissolution in a solvent and/or mechanically. It is also possible to recover the gel-like support material **A.** Another advantage of the gel-like support material **A** is its transparency. It is therefore possible to visualize the building of the article made of cured material as the gel-like support material **A** is transparent.
The present invention also relates to a method of additive manufacture of a three-dimensional article made of a cured material using a 3D printer and a gel-like support material, said method comprising the steps of:

1) printing at least one part of a curable precursor of a cured material to provide a printed part of said curable composition,
2) printing at least one part of the gel-like support material **A** according to the invention and as described below, for providing a supporting structure for preventing distortions and collapses within printed parts of said curable composition,

steps 1) and 2) being done simultaneously or successively in any order;

3) optionally repeating step 1) and/or step 2); and
4) allowing the curable composition to cure, optionally by heating, to obtain the three-dimensional article made of a cured material.

The present invention also relates to the use of the gel-like support material **A** according to the invention and as described below, in additive manufacturing methods.

## Detailed description

In the present disclosure, the symbols "wt. %" refer to a percentage by weight.

*Gel-like support material A*

The gel-like support material **A** is prepared by mixing the following essential components of a composition **V** comprising:

(a) for 100 parts by weight of at least one organic compound having at least two hydroxyls groups bound to carbon atoms with the proviso that at least one hydroxyl group is a secondary alcohol,
(b) from 1 part to 50 parts by weight, and preferably from 10 parts to 40 parts by weight, of at least one nanoclay,
(c) from 1 part to 100 parts by weight, and preferably from 10 parts to 80 parts by weight, of water,
(d) from 0 part to 100 parts by weight, and preferably from 1 part to 100 parts by weight, of at least one water soluble or water dispersible polymer, and
(e) from 0 part to 20 parts by weight, and preferably from 0.001 part to 20 parts by weight, of at least one additive.

As used herein, the terms "hydroxyls groups bound to carbon atoms" is equivalent to the terms "hydroxyls groups attached to carbon atoms".

A secondary alcohol is a compound in which a hydroxy group, -OH, is attached to a saturated carbon atom which has two other carbon atoms attached to it.

In a preferred embodiment, the organic compound (a) has from 2 to 20 hydroxyl groups bound to carbon atoms with the proviso that at least one hydroxyl group is a secondary alcohol.

In another preferred embodiment, the organic compound (a) has from 2 to 20 hydroxyl groups bound to carbon atoms with the proviso that:

- at least one hydroxyl group is a secondary alcohol when the compound is linear; or
- at least two hydroxyl groups are secondary alcohols when the compound comprises at least one cyclic ring.

In another preferred embodiment, the organic compound (a) is selected from the group consisting of glycerol, diglycerol, triglycerol, tetraglycerol, polyglycerols, erythritol, xylitol, arabitol, ribitol, sorbitol, dulcitol, mannitol, maltitol, isomaltitol, lactitol, isosorbide and their blends.

In another preferred embodiment, the organic compound (a) is selected from the group consisting of saccharose, fructose, glucose, maltose, their oligomers and their blends.

Polyglycerols are inter-molecular glycerol ethers formed by the condensation of "n" (2 or more) glycerol molecules with elimination of "n-1" water molecules (available from Spiga Nord S.p.A).

As used herein, the term "nanoclay" refers to nanoparticles of layered mineral silicates. Nanoparticles are particles having at least one average dimension below or equal to 1 micron, preferably at least one dimension below or equal to 100 nm.

Depending on chemical composition and nanoparticle morphology, nanoclays are organized into several classes. Advantageously, nanoclays are phyllosilicates having a layered structure composed of tetrahedral sheets (T) and octahedral sheets (O). They can have the following structures:

- a TO (or 1:1) structure where each layer is formed by one tetrahedral sheet (T) and one octahedral sheet (O), like the group of kaolin-serpentines,
- a TOT (or 2:1) structure where each layer is formed by one octahedral sheet (O) merged between two tetrahedral sheets (T), like the groups of smectites and bentonites, or
- a TOT:O (or 2:1:1) structure where each layer is formed by one octahedral sheet (O) adjacent to one octahedral sheet (O) merged between two tetrahedral sheets (T), like the group of chlorites.

In a preferred embodiment, the nanoclay (b) is selected from the group consisting of kaolin-serpentines, preferably selected from the group consisting of halloysite and kaolinite; smectites, preferably selected from the group consisting of montmorillonite, hectorite and laponite, bentonites; and mixtures thereof.

The nanoclay (b) may be selected from kaolin-serpentines, preferably from the group consisting of halloysite, kaolinite and mixtures thereof. The nanoclay may also be selected from the group consisting of smectites, bentonites and mixtures thereof.

Advantageously, the nanoclay (b) is selected from smectites, preferably from the group consisting of saponite, hectorite, sauconite, stevensite, swinefordite, montmorillonite, beidellite, nontronite, volkonskoite fluorohactite, laponite and mixtures thereof. The nanoclay may also be selected from the group consisting of montmorillonite, hectorite and mixtures thereof.

In a preferred embodiment, the nanoclay (b) is selected from the group consisting of kaolin-serpentines, preferably selected from the group consisting of halloysite and kaolinite; smectites, preferably selected from the group consisting of montmorillonite, hectorite and laponite, bentonites; and mixtures thereof.

In another preferred embodiment, the nanoclay (b) is selected from smectites, preferably from the group consisting of saponite, hectorite, sauconite, stevensite, swinefordite, montmorillonite, beidellite, nontronite, volkonskoite fluorohactite, laponite and mixtures thereof.

More preferably, the nanoclay (b) is laponite. Laponite is a silicic acid, lithium magnesium sodium salt, which can have the following empirical formula: $Na:^{+}_{0.7}[(Si_8Mg_{5.5}Li_{0.3})O_{20}(OH)_4]^{-0.7}$. Laponite is a synthetic hectorite.

In another preferred embodiment, the gel-like support material **A** useful for an additive manufacturing method, is prepared by mixing components of a composition **V** comprising:

(a) from 1 to 65 weight percent, and preferably from 10 to 65 weight percent, and most preferably from 15 to 65 weight percent, of at least one organic compound having at least two hydroxyls groups bound to carbon atoms with the proviso that at least one hydroxyl group is a secondary alcohol, preferably from 3 weight percent to 50 weight percent,

(b) from 1 to 65 weight percent of at least one nanoclay, and preferably from 1 to 50 parts by weight of at least one nanoclay, and even more preferably from 5 to 20 weight percent,

(c) from 1 to 100 weight percent of water, and preferably from 10 to 80 parts by weight of water, and even more preferably from 5 to 30 weight percent,
(d) from 0 to 100 weight percent, preferably from 1 to 100 weight percent and more preferably from 1 to 25 weight percent, of at least one water soluble or water dispersible polymer, and
(e) from 0 to 20 weight percent, preferably from 0.001 to 20 weight percent, of at least one additive,

and wherein all weight percent are based on the total weight of the composition **V.**
The water used in the gel-like support material **A** is preferably demineralized or distilled.
Advantageously, the gel-like support material **A** has thixotropic properties. The support material composition **V** can have the following rheological characteristics: a low viscosity at high shear rate, and a high viscosity at low shear rate. The shear rate is the rate at which a fluid is sheared during flow. The viscosities of the support material composition **V** are measured at 25°C, using a Haake MARS rheometer (cone-plate of 2° and diameter of 20 mm at 25°C, GAP = 100 μm).
Preferably, the gel-like support material **A** has a viscosity less than or equal to 500 Pa.s at a shear rate of 10 $s^{-1}$ at 25°C, and a viscosity more than or equal to 500 Pa.s and lower than 100,000 Pa.s at a shear rate of 0.01 $s^{-1}$ at 25°C.
In a more preferred embodiment, the gel-like support material **A** has a viscosity less than or equal to 250 Pa.s at a shear rate of 10 $s^{-1}$. Preferably, the viscosity of the gel-like support material **A** is comprised between 3 Pa.s and 500 Pa.s, preferably between 9 and 250 Pa.s at a shear rate of 10 $s^{-1}$.
Preferably, the gel-like support material **A** has a viscosity more than or equal to 1,000 Pa.s at a shear rate of 0.01 $s^{-1}$. More preferably, the viscosity of the gel-like support material **A** is comprised between 500 Pa.s and 200,000 Pa.s, preferably between 1,000 Pa.s and 100,000 Pa.s at a shear rate of 0.01 $s^{-1}$.
A viscosity less than or equal to 500 Pa.s at a shear rate of 10 $s^{-1}$ indicates that, under shear stress, the gel-like support material **A** behaves like a fluid, and it is thus possible to print it. A viscosity more than or equal to 500 Pa.s at a shear rate of 0.01 $s^{-1}$ indicates that, under low or no shear stress, the gel-like support material **A** behaves like a gel, and can therefore be used as a support for a curable composition. Consequently, the gel-like support material **A** has good thixotropic properties which are compatible with 3D printing. Moreover, after stopping the shear stress, the viscosity of the gel-like support material **A** rapidly increases back to a high value, which makes it possible to rapidly print another layer of the gel-like support material **A** or of the curable composition on top of it. The viscosity of the gel-like support material **A** can be more than or equal to 500 Pa.s at a shear rate of 0.01 $s^{-1}$, 90 seconds after stopping a shear stress of 20 $s^{-1}$.
In a preferred embodiment, the gel-like support material A further contains at least one additive (e) which is selected from the group consisting of: a rheological additive, a coloring agent; a pH buffer; an antimicrobial agent; a dispersing agent, a surfactant, a functional additive and mixtures thereof.
When present, the amount of the at least one additive (e) is preferably from 0.1 to 20 parts by weight for 100 parts per weight of component (a).
The rheology additives can be used to modify the rheological properties of the gel-like support material **A.** Rheology additives that act as viscosity modifiers are especially useful in the present invention. Examples of rheology additives that act as viscosity modifiers include:

- hydrosoluble or hydrodispersible polymers, which can be selected from polysaccharides like cellulose, xanthane gum, guar gum, and alginates; cellulose ethers like carboxymethyl cellulose; polymers based on acrylic acid (carbomer); poloxamers; polyethylene oxide; and mixtures thereof, and
- protein or peptides, which can be selected from collagen, fibrin, gelatin and mixtures thereof.

Advantageously, the gel-like support material **A** further comprises a poloxamer. Examples of poloxamer include the ones commercialized under the name Pluronic™, like Pluronic™ 127.
In a specific embodiment, the gel-like support material **A** further comprises more than 0.1 wt. % of a hydrosoluble or hydrodispersible polymer, preferably between 0.1 and 25 wt. %, more preferably between 1 and 20 wt. %, and even more preferably between 5 and 20 wt. % and wherein the weight percent are based on the total weight of the composition V.
Coloring agents can be used to color the gel-like support material **A,** which is generally transparent if no colouring agents are used. Examples of colouring agents include organic or inorganic pigments and dyes.
A pH buffer maybe used to modify or stabilize the pH of the support material composition **V.** The pH adjuster can be a buffer solution, a base or an acid.
Examples of buffer solution include carbonate buffers, like citric acid or lactic acid buffers, borate buffers, phosphate buffers and sulfate buffers.
Examples of base that can be used in the present invention include sodium hydroxide, sodium metasilicate, ammonium solutions, primary amines, like 2-amino-2-methyl-1-propanol, secondary amines, or tertiary amines, like dimethylethanolamine or triethanolamine.

Antimicrobial agents include antibacterial and antifungal agents.

The dispersing agents facilitate the dispersion of the clay, they can be used to obtain a concentrated solution of nanoclay. Examples of dispersing agents include condensed phosphates like tetrasodium pyrophosphates and some non-ionic surfactants.

The addition of surfactants reduces the surface tension between the gel-like support material A and the 3D structure being printed. The person skilled in the art knows how to choose suitable surfactants which are useful for the invention and to adapt the concentration.

Functional additives are compound that may modify

*Use of the gel-like support material A*

The present invention also relates to the use of the gel-like support material **A** according to the invention and as described above in additive manufacturing methods.

*Method of additive manufacturing*

The invention also concerns a method of additive manufacture of a three-dimensional article made of a cured material using a 3D printer and the gel-like support material **A** according to the invention and as defined above, said method comprising the steps of:

1) printing at least one part of a curable precursor of a cured material to provide a printed part of said curable composition,
2) printing at least one part of the gel-like support material **A** according to the invention and as described below, for providing a supporting structure for preventing distortions and collapses within printed parts of said curable composition,

steps 1) and 2) being done simultaneously or successively in any order;

3) optionally repeating step 1) and/or step 2); and
4) allowing the curable composition to cure, optionally by heating, to obtain the three-dimensional article made of a cured material.

In a preferred embodiment, the 3D printer is an extrusion 3D printer or a 3D jetting printer.

In another preferred embodiment, the method further comprises a step 5) consisting of removing the gel-like support material **A** by mechanical means, by dissolution in a solvent, preferably by dissolution in water, by use of pressurized water or by immersion in an ultrasonic bath.

In another preferred embodiment, the method further comprises a final step 6) wherein the three-dimensional article made of a cured material undergoes a mechanical post-treatment, a chemical post-treatment and/or a thermal post-treatment, said thermal post-treatment is preferably done at a temperature between 80°C to 200°C.

The 3D printing of the gel-like support material **A** is preferably done using an extrusion 3D printer comprising (i) at least one dispenser for printing the gel-like support material **A.** In an embodiment, the extrusion 3D printer comprises (i) at least a nozzle for printing the support composition material **V,** the diameter of each nozzle being comprised from 50 to 2,000 μm, preferably from 100 to 800 μm and most preferably from 100 to 500 μm.

In an embodiment, the 3D printer is an extrusion 3D printer comprising (i) at least one dispenser, e.g. a nozzle or print head, for printing the curable composition precursor of a material, and (ii) at least one dispenser for printing the gel-like support material **A.**

In an embodiment, the extrusion 3D printer comprises (i) at least a nozzle for printing the curable composition precursor of a material, and (ii) at least a nozzle for printing the gel-like support material **A,** the diameter of each nozzle being comprised from 50 to 2,000 μm, preferably from 100 to 800 μm and most preferably from 100 to 500 μm.

In an embodiment of the method, the method for additive manufacturing uses an extrusion 3D printer comprising (i) at least one cartridge comprising the gel-like support material **A** to be dispensed through a nozzle, and (ii) at least one cartridge comprising the curable composition precursor of a material to be dispensed through a nozzle, the diameter of each nozzle being comprised from 50 to 2,000 μm, preferably from 100 to 800 μm and most preferably from 100 to 500 μm, and the cartridge pressure being preferably comprised from 1 to 28 bars.

3D printing is generally associated with a host of related technologies used to fabricate physical objects from computer generated, e.g. computer-aided design (CAD), data sources.

This disclosure generally incorporates ASTM Designation F2792 - 12a, "Standard Terminology for Additive Manufacturing Technologies".

"3D printer" is defined as "a machine used for 3D printing" and "3D printing" is defined as "the fabrication of objects through the deposition of a material using a print head, nozzle, or another printer technology."

"Additive manufacturing (AM)" is defined as "a process of joining materials to make objects from 3D model data, usually layer upon layer, as opposed to subtractive manufacturing methodologies. Synonyms associated with and encompassed by 3D printing include additive fabrication, additive processes, additive techniques, additive layer manufacturing, layer manufacturing, and freeform fabrication." Additive manufacturing (AM) may also be referred to as rapid prototyping (RP). As used herein, "3D printing" is generally interchangeable with "additive manufacturing" and vice versa.

"Printing" is defined as depositing of a material, here a curable composition precursor of a cured material or a support material composition, using a print head, nozzle, or another printer technology.

In this disclosure "3D or three-dimensional article, object or part" means an article, object or part obtained by additive manufacturing or 3D printing as disclosed above.

In general, all 3D printing processes have a common starting point, which is a computer-generated data source or program which may describe an object. The computer-generated data source or program can be based on an actual or virtual object. For example, an actual object can be scanned using a 3D scanner and scan data can be used to make the computer-generated data source or program. Alternatively, the computer-generated data source or program may be designed from scratch.

The computer-generated data source or program is typically converted into a standard tessellation language (STL) file format; however other file formats can also or additionally be used. The file is generally read into 3D printing software, which takes the file and optionally user input to separate it into hundreds, thousands, or even millions of "slices." The 3D printing software typically outputs machine instructions, which may be in the form of G-code, which is read by the 3D printer to build each slice of the support and of the precursor of the silicone elastomer article. The machine instructions are transferred to the 3D printer, which then builds the objects (support and precursor of the silicone elastomer article), layer by layer, based on this slice information in the form of machine instructions. Thicknesses of these slices may vary.

Typically, the 3D printer utilizes a dispenser, e.g. a nozzle or print head, for printing the curable composition precursor of a material and another dispenser for printing the gel-like support material **A.** Optionally, the dispensers may be heated before, during, and after dispensing the curable composition precursor of the material and/or the gel-like support material **A.** More than one dispenser may be utilized with each dispenser having independently selected properties.

An extrusion 3D printer is a 3D printer where the material is extruded through a nozzle, syringe or orifice during the additive manufacturing process. The 3D printer can have one or more nozzle, syringe or orifice. Preferably, the 3D printer has at least 2 nozzles, syringes or orifices for the additive manufacturing process.

Material extrusion generally works by extruding material through a nozzle, syringe or orifice to print one cross-section of an object, which may be repeated for each subsequent layer. The extruded material bonds to the layer below it during cure of the material.

Advantageously, the curable composition precursor of a material is extruded through a nozzle and the gel-like support material **A** is extruded through another nozzle. The nozzles may be heated to aid in dispensing the curable composition precursor of a material.

The average diameter of the nozzle defines the thickness of the layer. In an embodiment, the diameter of the nozzle is comprised from 50 to 2,000 $\mu$m, preferably from 100 to 800 $\mu$m and most preferably from 100 to 500 $\mu$m.

The distance between the nozzle and the substrate is a parameter to assure good shape. Preferably it is comprised from 70 to 200 %, more preferably from 80 to 120 % of the nozzle average diameter.

The curable composition precursor of a material precursor of the article made of cured material and the gel-like support material **A** to be dispensed through the nozzles may be supplied from cartridge-like systems. The cartridges may include a nozzle or nozzles with an associated fluid reservoir or fluids reservoirs. It is also possible to use a coaxial two cartridges system with a static mixer and only one nozzle. This is especially useful when the curable composition is a multi-part composition.

Pressure will be adapted to the fluid to be dispensed, the associated nozzle average diameter and the printing speed.

Because of the high shear rate occurring during the nozzle extrusion, the viscosity of the curable composition precursor of a material and the gel-like support material **A** are greatly lowered and so permit the printing of fine layers.

Cartridge pressure could vary from 1 to 28 bars, preferably from 2 to 25 bars and most preferably from 4 to 8 bars. When nozzle diameters lower than 100 $\mu$m are used, cartridge pressure shall be higher than 20 bars to get good material extrusion. An adapted equipment using aluminum cartridges shall be used to resist such a pressure.

The nozzle and/or build platform moves in the X-Y (horizontal plane) to complete the cross section of the object, before moving in the Z axis (vertical) plane once one layer is complete. The nozzle has a high XYZ movement precision around 10 $\mu$m. After each layer is printed in the X, Y work plane, the nozzle is displaced in the Z direction only far enough that the next layer can be applied in the X, Y workplace. In this way, the objects which become the support or the curable

composition precursor of a material can be built one layer at a time from the bottom upwards.

As disclosed before, the distance between the nozzle and the previous layer is an important parameter to assure good shape. Preferably, it should be comprised from 70 to 200 %, preferably from 80 to 120 % of the nozzle average diameter.

Advantageously, printing speed is comprised between 1 and 100 mm/s, preferably between 3 and 50 mm/s to obtain the best compromise between good accuracy and manufacture speed.

"Material jetting" is defined as "an additive manufacturing process in which droplets of build material are selectively deposited". The material is applied with the aid of a printing head in the form of individual droplets, discontinuously, at the desired location of the work plane (Jetting). 3D apparatus and a process for the step-by-step production of 3D structures with a printing head arrangement comprising at least one, preferably 2 to 200 printing head nozzles, allowing the site-selective application where appropriate of a plurality of materials. The application of the materials by means of inkjet printing imposes specific requirements on the viscosity of the materials.

In a 3D jetting printer one or a plurality of reservoirs are subject to pressure and being connected via a metering line to a metering nozzle. Upstream or downstream of the reservoir there may be devices which make it possible for multicomponent curable composition precursor of a material (supplied in two or more containers or cartridges) to be homogeneously mixed and/or to evacuate dissolved gases. One or a plurality of jetting apparatuses operating independently of one another may be present, to construct the gel-like support material **A** and the article made of different cured materials.

Because of the high shear rate occurring in the metering valve during the jetting metering procedure, the viscosity of the curable compositions and the gel-like support material **A** is greatly lowered and so permits the jetting metering of very fine microdroplets. After the micro drop has been deposited on the substrate, there is a sudden reduction in its shear rate, and so its viscosity climbs again. Because of this, the deposited drop rapidly becomes of high viscosity again and permits the shape-precise construction of three-dimensional structures.

The individual metering nozzles can be positioned accurately in x-, y-, and z-directions to permit precisely targeted deposition of the curable composition precursor of a material drops and the gel-like support material **A** drops.

In an embodiment of the method, the method for additive manufacturing a three-dimensional material made of a cured material silicone uses an extrusion 3D printer comprising (i) at least one dispenser, e.g. a nozzle or print head, for printing the curable composition precursor of a material, and (ii) at least one dispenser for printing the gel-like support material **A.**

In an embodiment of the method, the method for additive manufacturing a three-dimensional material made of a cured material silicone uses an extrusion 3D printer comprising (i) at least a nozzle for printing the curable composition precursor of a material, and (ii) at least a nozzle for printing the gel-like support material **A,** the diameter of each nozzle being comprised from 50 to 2,000 μm, preferably from 100 to 800 μm and most preferably from 100 to 500 μm.

In an embodiment of the method, the method for additive manufacturing a three-dimensional material made of a cured material silicone uses an extrusion 3D printer comprising (i) at least one cartridge comprising gel-like support material **A** to be dispensed through a nozzle, and (ii) at least one cartridge comprising the curable composition precursor of a material to be dispensed through a nozzle, the diameter of each nozzle being comprised from 50 to 2,000 μm, preferably from 100 to 800 μm and most preferably from 100 to 500 μm, and the cartridge pressure being preferably comprised from 1 to 28 bars.

Contrary to other additive manufacturing methods, the method does not need to be carried out in an irradiated or heated environment to initiate the curing after each layer is printed to avoid the collapse of the structure.

The printing steps 1) and 2) can be performed simultaneously or successively.

When they are performed simultaneously, part(s) of the gel-like support material **A** and part(s) of the curable composition precursor of a material are printed at the same time.

When they are performed successively, step 1) can be performed before step 2), so that part(s) of the gel-like support material **A** is printed first, and then part(s) of the curable composition precursor of a material is printed; or, step 2) can be performed before step 1), so that part(s) of the curable composition precursor of a material is printed first, and then part(s) of the gel-like support material **A.**

Steps 1) and or 2) can be repeated several times. Each time these steps are repeated, they can be performed simultaneously or successively.

For example, first part(s) of the gel-like support material **A** is printed, then part(s) of the curable composition precursor of a material is printed, and finally part(s) of the gel-like support material **A** and part(s) of the curable composition precursor of a material are printed simul taneously.

The curing step 4) can be performed at room temperature or by heating. Advantageously, the curing step 4) is performed at room temperature or by heating at a temperature less than or equal to 40°C, preferably for a period from 10 min to 24 hours.

This curing step can be performed several times. In an embodiment, step 4) is a step of heating the curable composition precursor of a material. Heating can be used to expedite cure. In another embodiment, step 4) is a step of

irradiating the curable composition precursor of a material, the irradiation can be performed with UV light. Further irradiation can be used to expedite cure. In another embodiment, step 4) comprises both heating and irradiating the curable composition precursor of a material.

The method can further comprise a step of removal of the gel-like support material **A.** The gel-like support material **A** can be removed mechanically, for example by brushing the printed object or by blowing the printed object with dried air, preferably in a room with recovery of dust of the support.

The gel-like support material **A** can also be removed by dissolution in a solvent, preferably in water, and more preferably by immersion in a stirred water bath (demineralized water, or in acidic conditions, or using a dispersing agent.

The gel-like support material **A** can also be removed mechanically and by dissolution in a solvent, for example using a combination of solvent and ultrasounds.

The removal step can be performed before and/or after the curing step 4). According to an embodiment of the method, a first curing step 4) is performed, by letting the curable composition precursor of a material to cure at room temperature or by heating the curable composition precursor of a material at a temperature less than or equal to 40°C, preferably for a period from 10 min to 24 hours, then the support is removed mechanically and/or by dissolution in a solvent, and then another curing step 4) is performed, by heating the curable composition precursor of a material at a temperature between 25°C and 250°C, preferably between 30°C and 200°C, to complete the curing.

It is possible to recycle the gel-like support material **A.** When the support is removed mechanically, the nanoclay can be collected, lyophilized and used again. After dissolution of the support in a solvent such as water or water with dispersant additive, it is possible to recover a concentrated solution of nanoclay by evaporation of the water.

Post-Process Options

Optionally, post-processing steps can greatly improve the surface quality of the printed articles. Sanding is a common way to reduce or remove the visibly distinct layers of the model. Spraying or coating the surface of the cured material with a curable silicone composition can be used to get the right smooth surface aspect after curing it. A surfacing treatment with a laser can also be done.

For medical applications, a sterilization of the final cured material can be obtained for example : by heating either in a dry atmosphere or in an autoclave with vapor, for example by heating the object at a temperature greater than 100°C, under gamma ray, sterilization with ethylene oxide, sterilization with an electron beam.

The obtained cured material can be any article with simple or complex geometry. It can be for example anatomic models (functional or nonfunctional) such as heart, lumb, kidney, prostate,..., models for surgeons and educative world or orthotics or prostheses or even implants of different classes such as long term implants : hearing aids, stents, larynx implants, etc.

The obtained cured material can also be an actuator for robotics, a gasket, a mechanical piece for automotive/aeronautics, a piece for electronic devices, a package for the encapsulation of components, a vibrational isolator, an impact isolator or a noise isolator.

Curable compositions precursor of cured materials

Suitable curable compositions precursor of cured materials are compositions precursors of materials such as thermoplastic materials, for example acrylonitrile-butadienestyrene (ABS) copolymers, acrylonitrile styrene acrylate (ASA), polylactic acid (PLA), polycarbonates (PC), blends of PC and ABS (PC-ABS), polysulfones, polyethersulfones, polyphenylsulfones, polyetherimides, polyamides modified variations thereof, polystyrenes, polypropylenes, copolyesters, silicone rubbers and silicone elastomers and blends thereof.

In a preferred embodiment, the curable composition precursor of a material is a composition (or formulation) precursor of material such as thermoset polyurethane materials (PUR), thermoplastic copolyamides (TPA), thermoplastic copolyesters (TPC), thermoplastic olefin-based materials (TPO), styrene block copolymers (TPS), thermoplastic urethane-based materials (TPU), cured thermoplastic olefin-based materials (TPV), thermoplastic polyvinyl chloride-based materials (PVC), silicone rubbers and silicone elastomers.

In a preferred embodiment, the curable composition precursor of a cured material is a curable silicone composition.

Curable silicone composition

The curable silicone composition **X** precursor of the silicone cured material can be a silicone composition curable via polyaddition reaction or via poly condensation reaction.

In the process according to the invention, the curable silicone composition **X** precursor of the silicone cured material is a curable silicone composition having preferably a viscosity at 25°C comprised between 1,000 mPa.s and

10,000,000 mPa.s. The process according to the invention is well adapted to print a curable silicone composition **X** precursor of the silicone elastomer article having a viscosity lower than 50,000 mPa.s, preferably lower than 10,000 mPa.s, for example comprised between 1,000 to 5,000 mPa.s. The use of the support material composition **V** as described herein allows the printing of silicone compositions having different viscosities, for example silicone compositions having low viscosities.

The viscosities of the silicone compositions and their individual constituents described herein correspond to a "Newtonian" dynamic viscosity magnitude at 25°C, i.e. the dynamic viscosity which is measured, in a manner that is known per se, with a Brookfield viscometer at a shear rate gradient that is low enough for the measured viscosity to be independent of the rate gradient.

In one embodiment, the curable silicone composition **X** precursor the silicone cured material is a silicone composition curable via polyaddition. In this embodiment, the composition **X** comprises:

(A) at least one organopolysiloxane compound **A** comprising, per molecule at least two $C_2$-$C_6$ alkenyl radicals bonded to silicon atoms,
(B) at least one organohydrogenopolysiloxane compound **B** comprising, per molecule, at least two hydrogen atoms bonded to an identical or different silicon atom,
(C) at least one catalyst **C** consisting of at least one metal or compound, from the platinum group,
(D) optionally at least one filler **D,**
(E) optionally at least thixotropic agent **E,** and
(F) optionally at least one curing inhibitor **F.**

Organopolysiloxane A

According to a particularly advantageous mode, the organopolysiloxane **A** comprising, per molecule, at least two $C_2$-$C_6$ alkenyl radicals bonded to silicon atoms, comprises:

(i) at least two siloxyl units (**A.1**), which may be identical or different, having the following formula:

$$W_aZ_bSiO_{\frac{4-(a+b)}{2}} \quad \textbf{(A.1)}$$

in which:

- a= 1 or 2, b= 0, 1 or 2 and a+b= 1, 2 or 3; preferably a+b=3 and a=1
- the symbols W, which may be identical or different, represent a linear or branched $C_2$-$C_6$ alkenyl group,
- and the symbols Z, which may be identical or different, represent a monovalent hydrocarbon-based group containing from 1 to 30 carbon atoms, preferably chosen from the group formed by alkyl groups containing from 1 to 8 carbon atoms and aryl groups containing between 6 and 12 carbon atoms, and even more preferentially chosen from the group formed by methyl, ethyl, propyl, 3,3,3-trifluoropropyl, xylyl, tolyl and phenyl radicals,

(ii) and optionally at least one siloxyl unit having the following formula:

$$Z^1_aSiO_{\frac{4-a}{2}} \quad \textbf{(A.2)}$$

in which:

- a= 0, 1, 2 or 3, and preferably a=2
- the symbols $Z^1$, which may be identical or different, represent a monovalent hydrocarbon-based group containing from 1 to 30 carbon atoms, preferably chosen from the group formed by alkyl groups containing from 1 to 8 carbon atoms inclusive and aryl groups containing between 6 and 12 carbon atoms, and even more preferentially chosen from the group formed by methyl, ethyl, propyl, 3,3,3-trifluoropropyl, xylyl, tolyl and phenyl radicals.

Advantageously, Z and $Z^1$ are chosen from the group formed by methyl and phenyl radicals, and W is chosen

from the following list: vinyl, propenyl, 3-butenyl, 5-hexenyl, 9-decenyl, 10-undecenyl, 5,9-decadienyl and 6-11-dodecadienyl, and preferably, W is a vinyl. In a preferred embodiment, in formula (A.1) a=1 and a+b=2 or 3 and in formula (A.2) a=2 or 3.

These organopolysiloxanes **A** may have a linear, branched or cyclic structure. Their degree of polymerization is preferably between 2 and 5,000.

When they are linear polymers, they are essentially formed from siloxyl units D chosen from the group formed by the siloxyl units $W_2SiO_{2/2}$, $WZSiO_{2/2}$ and $Z^1{}_2SiO_{2/2}$, and from siloxyl units M chosen from the group formed by the siloxyl units $W_3SiO_{1/2}$, $WZ_2SiO_{1/2}$, $W_2ZSiO_{1/2}$ and $Z^1{}_3SiO_{1/2}$. The symbols W, Z and $Z^1$ are as described above.

As examples of end units M, mention may be made of trimethylsiloxy, dimethylphenylsiloxy, dimethylvinylsiloxy or dimethylhexenylsiloxy groups.

As examples of units D, mention may be made of dimethylsiloxy, methylphenylsiloxy, methylvinylsiloxy, methylbutenylsiloxy, methylhexenylsiloxy, methyldecenylsiloxy or methyldecadienylsiloxy groups.

Said organopolysiloxanes **A** may be oils or gums with a dynamic viscosity from about 10 to 10,000,000 mPa.s at 25°C, generally from about 1,000 to 120,000 mPa.s at 25°C. When they are cyclic organopolysiloxanes, they are formed from siloxyl units D having the following formulae: $W_2SiO_{2/2}$, $Z_2SiO_{2/2}$ or $WZSiO_{2/2}$, which may be of the dialkylsiloxy, alkylarylsiloxy, alkylvinylsiloxy or alkylsiloxy type. Examples of such siloxyl units have already been mentioned above. Said cyclic organopolysiloxanes **A** have a viscosity from about 10 to 5,000 mPa.s at 25°C.

Preferably, the organopolysiloxane compound **A** has a mass content of Si-vinyl units of between 0.001 and 30%, preferably between 0.01 and 10%.

Organohydrogenpolysiloxane B

According to a preferred embodiment, the organohydrogenopolysiloxane compound **B** is an organopolysiloxane containing at least two hydrogen atoms per molecule, bonded to an identical or different silicon atom, and preferably containing at least three hydrogen atoms per molecule directly bonded to an identical or different silicon atom.

Advantageously, the organohydrogenopolysiloxane compound **B** is an organopolysiloxane comprising:

(i) at least two siloxyl units and preferably at least three siloxyl units having the following formula:

$$H_dZ^3_eSiO_{\frac{4-(d+e)}{2}} \quad \textbf{(B.1)}$$

in which:

- d= 1 or 2, e = 0, 1 or 2 and d+e= 1, 2 or 3,
- the symbols $Z^3$, which may be identical or different, represent a monovalent hydrocarbon-based group containing from 1 to 30 carbon atoms, preferably chosen from the group formed by alkyl groups containing from 1 to 8 carbon atoms and aryl groups containing between 6 and 12 carbon atoms, and even more preferentially chosen from the group formed by methyl, ethyl, propyl, 3,3,3-trifluoropropyl, xylyl, tolyl and phenyl radicals, and

(ii) optionally at least one siloxyl unit having the following formula:

$$Z^2_cSiO_{\frac{4-c}{2}} \quad \textbf{(B.2)}$$

in which:

- c= 0, 1, 2 or 3,
- the symbols $Z^2$, which may be identical or different, represent a monovalent hydrocarbon-based group containing from 1 to 30 carbon atoms, preferably chosen from the group formed by alkyl groups containing from 1 to 8 carbon atoms and aryl groups containing between 6 and 12 carbon atoms, and even more preferentially chosen from the group formed by methyl, ethyl, propyl, 3,3,3-trifluoropropyl, xylyl, tolyl and phenyl radicals.

The organohydrogenopolysiloxane compound **B** may be formed solely from siloxyl units of formula **(B.1)** or

may also comprise units of formula **(B.2).** It may have a linear, branched or cyclic structure. The degree of polymerization is preferably greater than or equal to 2. More generally, it is less than 5,000.

Examples of siloxyl units of formula **(B.1)** are especially the following units: $H(CH_3)_2SiO_{1/2}$, $H(CH_3)SiO_{2/2}$ and $H(C_6H_5)SiO_{2/2}$.

When they are linear polymers, they are essentially formed from:

- siloxyl units D chosen from the units having the following formulae $Z^2{}_2SiO_{2/2}$ or $Z^3HSiO_{2/2}$, and
- siloxyl units M chosen from the units having the following formulae $Z^2{}_3SiO_{1/2}$ or $Z^3{}_2HSiO_{1/2}$,

the symbols $Z^2$ and $Z^3$ are as described above.

These linear organopolysiloxanes may be oils with a dynamic viscosity from about 1 to 100,000 mPa.s at 25°C, generally from about 10 to 5,000 mPa.s at 25°C, or gums with a dynamic viscosity of about 1,000,000 mPa.s or more at 25°C.

When they are cyclic organopolysiloxanes, they are formed from siloxyl units D having the following formulae $Z^2{}_2SiO_{2/2}$ and $Z^3HSiO_{2/2}$, which may be of the dialkylsiloxy or alkylarylsiloxy type or units $Z^3HSiO_{2/2}$ solely, the symbols $Z^2$ and $Z^3$ are as described above. They have a viscosity from about 1 to 5,000 mPa.s.

Examples of linear organohydrogenopolysiloxane compounds **B** are: dimethylpolysiloxanes bearing hydrogenodimethylsilyl end groups, dimethyl, hydrogenomethylpolysiloxanes bearing trimethylsilyl end groups, dimethyl,hydrogenomethylpolysiloxanes bearing hydrogenodimethylsilyl end groups, hydrogenomethylpolysiloxanes bearing trimethylsilyl end groups, and cyclic hydrogenomethylpolysiloxanes.

The oligomers and polymers corresponding to the general formula **(B.3)** are especially preferred as organohydrogenopolysiloxane compound **B:**

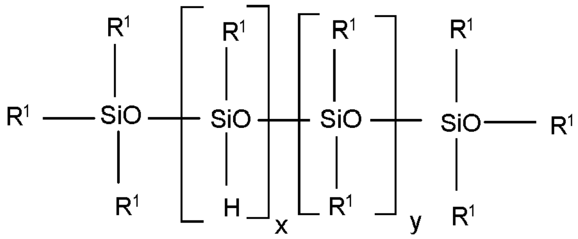

**(B.3)**

in which:

- x and y are an integer ranging between 0 and 200,
- the symbols $R^1$, which may be identical or different, represent, independently of each other:
    - a linear or branched alkyl radical containing 1 to 8 carbon atoms, optionally substituted with at least one halogen, preferably fluorine, the alkyl radicals preferably being methyl, ethyl, propyl, octyl and 3,3,3-trifluoropropyl,
    - a cycloalkyl radical containing between 5 and 8 cyclic carbon atoms,
    - an aryl radical containing between 6 and 12 carbon atoms, or
    - an aralkyl radical bearing an alkyl part containing between 5 and 14 carbon atoms and an aryl part containing between 6 and 12 carbon atoms.

The following compounds are particularly suitable for the invention as organohydrogenopolysiloxane compound **B:**

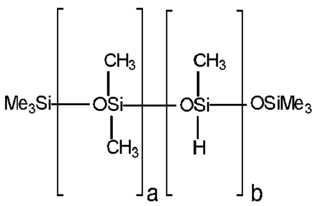

S1

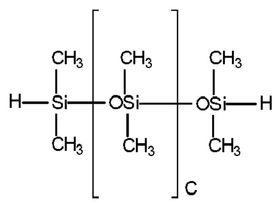

S2

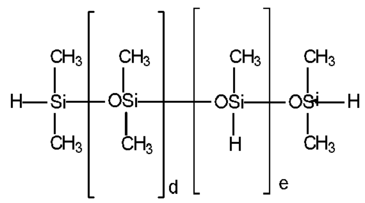

S3

with a, b, c, d and e defined below:

- in the polymer of formula S1:
    - $0 \leq a \leq 150$, preferably $0 \leq a \leq 100$, and more particularly $0 \leq a \leq 20$, and
    - $1 \leq b \leq 90$, preferably $10 \leq b \leq 80$ and more particularly $30 \leq b \leq 70$,
- in the polymer of formula S2: $0 \leq c \leq 100$, preferably $0 \leq c \leq 15$
- in the polymer of formula S3: $5 \leq d \leq 200$, preferably $20 \leq d \leq 100$, and $2 \leq e \leq 90$, preferably $10 \leq e \leq 70$.

In particular, an organohydrogenopolysiloxane compound **B** that is suitable for use in the invention is the compound of formula S1, in which a = 0.

Preferably, the organohydrogenopolysiloxane compound **B** has a mass content of SiH units of between 0.2 and 91%, preferably between 0.2 and 50%.

In an embodiment, the organohydrogenopolysiloxane compound **B** is a branched polymer. Said branched organohydrogenopolysiloxane compound **B** comprises

a) at least two different siloxyl units selected from siloxyl unit M of formula $R_3SiO_{1/2}$, siloxyl unit D of formula $R_2SiO_{2/2}$, siloxyl unit T of formula $RSiO_{3/2}$ and siloxyl unit Q of formula $SiO_{4/2}$, in which R denotes monovalent hydrocarbon group with 1 to 20 carbon atoms or an hydrogen atom, and
b) provided that at least one of these siloxyl units is siloxyl unit T or Q and at least one of siloxyl units M, D or T contains a Si-H group.

Thus, according to one preferable embodiment, the branched organohydrogenopolysiloxane compound **B** can be selected from the following groups:

- organopolysiloxane resin of formula M'Q, which is essentially formed from:

  (a) monovalent siloxyl unit M' of formula $R_2HSiO_{1/2}$; and
  (b) tetravalent siloxyl unit Q of formula $SiO_{4/2}$; and

- organopolysiloxane resin of formula MD'Q, which is basically consisted of the following units:

  (a) divalent siloxyl unit D' of formula $RHSiO_{2/2}$;
  (b) monovalent siloxyl unit M of formula $R_3SiO_{1/2}$; and
  (c) tetravalent siloxyl unit Q of formula $SiO_{4/2}$;

wherein R represents monovalent hydrocarbyl having 1 to 20 carbon atoms, preferably represents monovalent aliphatic or aromatic hydrocarbyl having 1 to 12, more preferably 1 to 8 carbon atoms.

As a further embodiment, a mixture of at least a linear organohydrogenopolysiloxane compound **B** and at least a branched organohydrogenopolysiloxane compound **B** can be used. In this case, the linear and branched organohydrogenopolysiloxane compound **B** can be mixed in any proportion in a wide range, and the mixing proportion may be adjusted depending on the desired product properties such as hardness and the ratio of Si-H to alkenyl group.

In the context of the invention, the proportions of the organopolysiloxane **A** and of the organohydrogenopolysiloxane **B** are such that the mole ratio of the hydrogen atoms bonded to silicon (Si-H) in the organohydrogenopolysiloxane **B** to the alkenyl radicals bonded to silicon ($Si-CH=CH_2$) in the organopolysiloxane **A** is between 0.2 and 20, preferably between 0.5 and 15, more preferentially between 0.5 and 10 and even more preferentially between 0.5 and 5.

Catalyst C

Catalyst C consisting of at least one metal, or compound, from the platinum group are well known. The metals of the platinum group are those known under the name platinoids, this term combining, besides platinum, ruthenium, rhodium, palladium, osmium and iridium. Platinum and rhodium compounds are preferably used. Complexes of platinum and of an organic product described in patents US A 3 159 601, US A 3 159 602, US A 3 220 972 and European patents EP A 0 057 459, EP A 0 188 978 and EP A 0 190 530, and complexes of platinum and of vinylorganosiloxanes described in patents US A 3 419 593, US A 3 715 334, US A 3 377 432 and US A 3 814 730 may be used in particular. Specific examples are: platinum metal powder, chloroplatinic acid, a complex of chloroplatinic acid with β-diketone, a complex a chloroplatinic acid with olefin, a complex of a chloroplatinic acid with 1,3-divinyltetramethyldisiloxane, a complex of

silicone resin powder that contains aforementioned catalysts, a rhodium compound, such as those expressed by formulae: $RhCl(Ph_3P)_3$, $RhCl_3[S(C_4H_9)_2]_3$, etc.; tetrakis(triphenyl)palladium, a mixture of palladium black and triphenylphosphine, etc.

The platinum catalyst ought preferably to be used in a catalytically sufficient amount, to allow sufficiently rapid curing at room temperature. Typically, 1 to 200 ppm by weight of the catalyst are used, based in the amount of Pt metal, relative to the total silicone composition preferably 1 to 100 ppm by weight, more preferably 1 to 50 ppm by weight.

Filler D

To allow a sufficiently high mechanical strength the addition- curing silicone compositions can comprise filler, such as for example silica fine particles, as reinforcing fillers **D.** Precipitated and fumed silicas and mixtures thereof can be used. The specific surface area of these actively reinforcing fillers ought to be at least 50 $m^2/g$ and preferably in the range from 100 to 400 $m^2/g$ as determined by the BET method. Actively reinforcing fillers of this kind are very well-known materials within the field of the silicone rubbers. The stated silica fillers may have hydrophilic character or may have been hydrophobized by known processes.

In a preferred embodiment, the silica reinforcing filler is fumed silica_with a specific surface area of at least 50 $m^2/g$ and preferably in the range from 100 to 400 $m^2/g$ as determined by the BET method. Fumed silica may be used as is, in an untreated form, but is preferably subjected to hydrophobic surface treatment. In those cases, where a fumed silica that has undergone hydrophobic surface treatment is used, either a fumed silica that has been subjected to preliminary hydrophobic surface treatment may be used, or a surface treatment agent may be added during mixing of the fumed silica with the organopolysiloxane **A,** so that the fumed silica is treated in-situ.

The surface treatment agent may be selected from any of the conventionally used agents, such as alkylalkoxysilanes, alkylchlorosilanes, alkylsilazanes, silane coupling agents, titanate-based treatment agents, and fatty acid esters, and may use either a single treatment agent, or a combination of two or more treatment agents, which may be used either simultaneously or at different timings.

The amount of the silica reinforcing filler **D** in the addition-curing silicone compositions is in the range from 5% to 40% by weight, preferably 10% to 35% by weight of the total composition. If this blend quantity is less than 5 % by weight, then adequate elastomer strength may not be obtainable, whereas if the blend quantity exceeds 40% by weight, the actual blending process may become difficult.

The silicone compositions according to the invention may also comprise other fillers like a standard semi-reinforcing or packing filler, hydroxyl functional silicone resins, pigments, or adhesion promoters.

Non siliceous minerals that may be included as semi-reinforcing or packing mineral fillers can be chosen from the group constituted of: carbon black, titanium dioxide, aluminium oxide, hydrated alumina, calcium carbonate, ground quartz, diatomaceous earth, zinc oxide, mica, talc, iron oxide, barium sulfate and slaked lime.

Silicone resin denotes an organopolysiloxane comprising at least one T and/or one Q siloxy unit with Q: $SiO_{2/2}$ and T: $R1SiO_{3/2}$. The hydroxyl functional silicone resin are well known and can be chosen from MQ(OH), MDT(OH), or DT(OH) resins with M: $R1R2R3SiO_{1/2}$ ,D:$R1R2SiO_{2/2}$, Q(OH): $(OH)SiO_{3/2}$, and T(OH): $(OH)R1SiO_{2/2}$, the R1, R2 and R3 groups being chosen independently of one another from:

- linear or branched alkyl groups having from 1 to 8 carbon atoms inclusive, optionally substituted by one or more halogen atoms; and
- aryl or alkylaryl groups containing from 6 to 14 carbon atoms inclusive. Preferably, the hydroxyl functional silicone resin is a MQ(OH) resin.

The curable silicone composition **X** can advantageously comprise a thixotropic agent.

Thixotropic agent E

The composition **X** can also comprise a thixotropic agent **E,** which is a rheological agent which serves to adjust the shear-thinning and thixotropic characteristics.

In an embodiment, the thixotropic agent **E** contains polar groups. Preferably constituent the thixotropic agent **E** can be selected from the group consisting of : an organic or organosilicon compound having at least one epoxy group, an organic or organopolysiloxane compound having at least one (poly)ether group, an organic compound having at least (poly)ester group, an organopolysiloxane having at least one aryl group , or with tetramethylpiperidine group known as "HALS" (Hindered Amine Light stabilizer) and any combination thereof.

According to an embodiment, the thixotropic agent **E** is an organopolysiloxane-polyoxyalkylene copolymer **E',** also known as polydiorganosiloxane-polyether copolymers or polyalkylene oxide modified polyorganosiloxanes, are organopolysiloxanes containing siloxyl units which carry alkylene oxide chain sequences. Preferably, organopolysiloxane-polyoxyalkylene copolymer **E'** are organopolysiloxanes containing siloxyl units which carry ethylene oxide chain sequences and/or propylene oxide chain sequences.

In a preferred embodiment the organopolysiloxane-polyoxyalkylene copolymer **E'** is an organopolysiloxane containing siloxyl comprising units of the formula (E-1):

$$[R^1_aZ_bSiO_{(4-a-b)/2}]_n \qquad (E\text{-}1)$$

in which

- each $R^1$ is independently selected from hydrocarbon-based group containing from 1 to 30 carbon atoms, preferably chosen from the group formed by alkyl groups containing from 1 to 8 carbon atoms, alkenyl groups containing from 2 to 6 carbon atoms and aryl groups containing between 6 and 12 carbon atoms;
- each Z is a group $-R^2-(OC_pH_{2p})_q(OCH(CH_3)-CH_2)_s-OR^3$,

where

- n is an integer greater than 2;
- a and b are independently 0, 1, 2 or 3 and a+b=0, 1, 2 or 3,
- $R^2$ is a divalent hydrocarbon group having from 2 to 20 carbon atoms or a direct bond;
- $R^3$ is a hydrogen atom or a group as defined for $R^1$;
- The symbols p and r are independently an integer from 1 to 6;
- The symbols q and s are independently 0 or an integer such that $1<q + s< 400$;

and wherein each molecule of the organopolysiloxane-polyoxyalkylene copolymer **E'** contains at least one group Z.

In a preferred embodiment, in the formula (E-1) above:

- n is an integer greater than 2;
- a and b are independently 0, 1, 2 or 3 and a+b=0, 1, 2 or 3,
- $R^1$ is an alkyl group containing from 1 to 8 carbon atoms inclusive, and most preferably $R^1$ is a methyl group,
- $R^2$ is a divalent hydrocarbon group having from 2 to 6 carbon atoms or a direct bond;
- p=2 and r=3,
- q is comprised between 1 and 40, most preferably between 5 and 30,
- s is comprised between 1 and 40, most preferably between 5 and 30, and
- $R^3$ is a hydrogen atom or an alkyl group containing from 1 to 8 carbon atoms inclusive, and most preferably $R^3$ is an hydrogen atom.

In a most preferred embodiment, the organopolysiloxane-polyoxyalkylene copolymer **E'** is an organopolysiloxane containing a total number of siloxyl units (E-1) comprised 1 and 200, preferably between 50 and 150 and a total number of Z groups comprised between 2 and 25, preferably between 3 and 15.

An example of organopolysiloxane-polyoxyalkylene copolymer **E'** that can be used in the method of the invention corresponds to the formula (E-2)

$R^a_3SiO[R^a_2SiO]_t[R^aSi(R^b-(OCH_2CH_2)_x(OCH(CH_3)CH_2)y-OH)O]_rSiR^a_3$ (E-2) Where:

- each $R^a$ is independently selected from alkyl groups containing from 1 to 8 carbon atoms and preferably $R^a$ is a methyl group,
- each $R^b$ is a divalent hydrocarbon group having from 2 to 6 carbon atoms or a direct bond, and preferably $R^b$ is a propyl group,
- x and y are independently integers comprised from 1 to 40, preferably from 5 and 30, and most preferably from 10 to 30,
- t is comprised from 1 to 200, preferably from 25 to 150, and
- r is comprised from 2 to 25, preferably from 3 to 15.

Advantageously, in an embodiment the organopolysiloxane-polyoxyalkylene copolymer E' is:

$$Me_3SiO[Me_2SiO]_{75}[MeSi((CH_2)_3-(OCH_2CH_2)_{22}(OCH-(CH_3)CH_2)_{22}-OH)O]_7SiMe_3.$$

In another embodiment, the organopolysiloxane-polyoxyalkylene copolymer **E'** is a branched organopolysiloxane-polyoxyalkylene copolymer comprising at least one T and/or one Q siloxy unit with Q corresponding to the siloxy unit $SiO_{2/2}$ and T corresponding to the siloxy unit $R^1SiO_{3/2}$ where $R^1$ is independently selected from hydrocarbon-based

group containing from 1 to 30 carbon atoms, preferably chosen from the group formed by alkyl groups containing from 1 to 8 carbon atoms, alkenyl groups containing from 2 to 6 carbon atoms and aryl groups containing between 6 and 12 carbon atoms

In another embodiment, the organopolysiloxane - polyoxyalkylene copolymer E' can further comprise other functional groups chosen from the group consisting of: alkenyl groups having from 2 to 6 carbon atoms, hydroxide, hydrogen, (meth)acrylate groups, amino groups and hydrolysable groups as alkoxy, enoxy, acetoxy or oxime groups.

Methods of preparing polydiorganosiloxane-polyoxyalkylene copolymers are well known in the art. For example, a polydiorganosiloxane-polyoxyalkylene copolymer can be prepared using a hydrosilylation reaction by reacting, for example, a polydiorganosiloxane containing silicon-bonded hydrogen atoms with a polyoxyalkylene containing groups having aliphatic unsaturation in the presence of a platinum group catalyst.

In one embodiment, the amount of the thixotropic agent **E** in the addition- curing silicone compositions is at least 0.3 % weight, preferably at least 0.4% weight, most preferably in the range from 0.6% to 4% weight, and even most preferably from 0.6% to 3% weight with respect to the total weight of the silicone composition.

In another embodiment, the amount of the thixiotropic agent **E** in the addition- curing silicone compositions is at least 0.2 % weight, preferably at least 0.25% weight, most preferably in the range from 0.25% to 3% weight, and even most preferably from 0.25% to 2% weight with respect to the total weight of the silicone composition.

## Curing inhibitor F

Curing inhibitors are commonly used in addition curing silicone compositions to slow the curing of the composition at ambient temperature. The curing inhibitor **F** may be chosen from the following compounds:

- acetylenic alcohols.
- organopolysiloxanes substituted with at least one alkenyl that may optionally be in cyclic form, tetramethylvinyltetrasiloxane being particularly preferred,
- pyridine,
- organic phosphines and phosphites,
- unsaturated amides, and
- alkyl and allyl maleates.

These acetylenic alcohols (Cf. FR-B-1 528 464 and FR-A-2 372 874), which are among the preferred hydrosilylation-reaction thermal blockers, have the formula:

$$(R')(R'')(OH)C - C \equiv CH$$

in which:

- R' is a linear or branched alkyl radical, or a phenyl radical;and
- R" is H or a linear or branched alkyl radical, or a phenyl radical; the radicals R' and R" and the carbon atom $\alpha$ to the triple bond possibly forming a ring.

The total number of carbon atoms contained in R' and R" being at least 5 and preferably from 9 to 20. For the said acetylenic alcohols, examples that may be mentioned include:

- 1-ethynyl-1-cyclohexanol;
- 3-methyl-1-dodecyn-3-ol;
- 3,7,11-trimethyl-1-dodecyn-3-ol;
- 1,1-diphenyl-2-propyn-1-ol;
- 3-ethyl-6-ethyl-1-nonyn-3-ol;
- 2-methyl-3-butyn-2-ol;
- 3-methyl-1-pentadecyn-3-ol; and
- diallyl maleate or diallyl maleate derivatives.

In a preferred embodiment, the curing inhibitor is 1-ethynyl-1-cyclohexanol

To obtain a longer working time or "pot life", the quantity of the inhibitor is adjusted to reach the desired "pot life". The concentration of the catalyst inhibitor in the present silicone composition is sufficient to slow curing of the composition at ambient temperature. This concentration will vary widely depending on the particular inhibitor used, the nature and concentration of the hydrosilylation catalyst, and the nature of the organohydrogenpolysiloxane. Inhibitor

concentrations as low as one mole of inhibitor per mole of platinum group metal will in some instances yield a satisfactory storage stability and cure rate. In other instances, inhibitor concentrations of up to 500 or more moles of inhibitor per mole of platinum group metal may be required. The optimum concentration for an inhibitor in a given silicone composition can be readily determined by routine experimentation.

Advantageously, the amount of the curing inhibitor **F** in the addition- curing silicone compositions is in the range from 0.01% to 0.2% weight, preferably from 0.03% to 0.15% weight with respect to the total weight of the silicone composition.

The use of the inhibitor is effective to avoid the premature curing of the silicone composition on the tip of the nozzle and subsequent disfiguration of the printed layer.

In a preferred embodiment, the curable silicone composition **X** of the invention comprise, per 100% weight of the silicone composition:

- from 45 to 80% weight of at least one organopolysiloxane compound **A,**
- from 0.1 to 10% weight of at least one organohydrogenopolysiloxane compound **B,**
- from 5 to 40 % weight of at least one reinforcing silica filler **D,**
- optionally from 0.3 to 4% weight of at least one thixotropic agent **E,**
- from 0.001 to 0.01% weight of platinum and
- from 0.01 to 0.2% weight of at least one curing inhibitor **F.**

**Multi-part Composition**

The curable silicone composition **X** can be a one-part composition comprising components **A** to **E** in a single part or, alternatively, a multi-part composition comprising these components in two or more parts, provided components **B,** and **C** are not present in the same part. For example, a multi-part composition can comprise a first part containing a portion of component **A** and all of component **C,** and a second part containing the remaining portion of component **A** and all of component **B.** In certain embodiments, component **A** is in a first part, component **B** is in a second part separate from the first part, and component **C** is in the first part, in the second part, and/or in a third part separate from the first and second parts. Components **D, E** and **F** may be present in a respective part (or parts) along with at least one of components **B,** or **C,** and/or can be in a separate part (or parts).

The one-part composition is typically prepared by combining the principal components and any optional ingredients in the stated proportions at ambient temperature. Although the order of addition of the various components is not critical if the composition is to be used immediately, the hydrosilylation catalyst is typically added last at a temperature below about 30°C to prevent premature curing of the composition.

Also, the multi-part composition can be prepared by combining the components in each part. Combining can be accomplished by any of the techniques understood in the art such as, blending or stirring, either in a batch or continuous process in a particular device. The particular device is determined by the viscosity of the components and the viscosity of the final composition.

In certain embodiments, when the curable silicone compositions **X** are multipart silicone compositions, the separate parts of the multi-part curable silicone composition may be mixed in a dispense printing nozzle, e.g. a dual dispense printing nozzle, prior to and/or during printing. Alternatively, the separate parts may be combined immediately prior to printing.

In another embodiment, the curable silicone composition **X** precursor of the silicone elastomer article is a silicone composition curable through polycondensation reaction which are well known by the skilled person. In this embodiment, the composition **X** comprises:

- at least one organopolysiloxane **G** comprising at least two groups chosen in the group consisting of OH groups and hydrolysable groups,
- a polycondensation catalyst,
- optionally at least one crosslinking agent **H** and
- optionally a filler **D** as disclosed before.

**Organopolysiloxane G**

Preferably, the organopolysiloxane **G** comprises at least two groups chosen in the group consisting of: hydroxy, alcoxy, alcoxy-alkylene-oxy, amino, amido, acylamino, aminoxy, iminoxy, cetiminoxy, acyloxy and enoxy groups.

Advantageously, polyorganosiloxane **G** comprises:

(i) at least two siloxyl units of formula (V):

$$R_g^1 Y_h SiO_{\frac{4-(g+h)}{2}} \qquad (V)$$

in which:

- $R^1$, identical or different, represent monovalents hydrocarbon radicals comprising from 1 to 30 carbon atoms;
- Y, identical or different, represent each an hydrolysable and condensable group or a hydroxy group, and are preferably chosen in the group consisting of hydroxy, alkoxy, alcoxy-alkylene-oxy, amino, amido, acylamino, aminoxy, iminoxy, cetiminoxy, acyloxy, iminoxy, cetiminoxy and enoxy group,
- g is 0, 1 or 2, h is 1, 2 or 3, the sum g + h is 1, 2 or 3, and

(ii) optionally one or more siloxyl unit(s) of formula (VI)

$$: R_i^2 SiO_{\frac{4-i}{2}} \qquad (VI)$$

in which

- $R^2$, identical or different, represent monovalents hydrocarbon radicals comprising from 1 to 30 carbon atoms optionally substituted by one or more halogen atoms or by amino, ether, ester, epoxy, mercapto or cyano groups, and i is 0, 1, 2 or 3.

As example of hydrolysable and condensable group Y of alkoxy type it is possible to cite groups having from 1 to 8 carbon atoms such as methoxy, ethoxy, n-propoxy, iso- propoxy, n-butoxy, iso-butoxy, sec-butoxy, tert-butoxy, 2-methoxyéthoxy, hexyloxy or octyloxy.

As example of hydrolysable and condensable group Y of alcoxy-alkylene-oxy type, it is possible to cite methoxy-ethylene-oxy.

As example of hydrolysable and condensable group Y of amino type, it is possible to cite methylamino, dimethylamino, ethylamino, diethylamino, n-butylamino, sec-butylamino or cyclohexylamino.

As example of hydrolysable and condensable group Y of amido type, it is possible to cite N-methyl-cetamido.

As example of hydrolysable and condensable group Y of acylamino type, it is possible to cite benzoyl-amino.

As example of hydrolysable and condensable group Y of aminoxy type, it is possible to cite dimethylaminoxy, diethylaminoxy, dioctylaminoxy ou diphenylaminoxy.

As example of hydrolysable and condensable group Y of iminoxy and in particulier cétiminoxy type, it is possible to cite groups derived from the following oximes: acetophenone-oxime, acetone-oxime, benzophenone-oxime, methyl-ethyl-cetoxime, di-isopropylcetoxime ou methylisobutyl-cetoxime.

As example of hydrolysable and condensable group Y of acyloxy type, it is possible to cite acetoxy.

As example of hydrolysable and condensable group Y of enoxy type, it is possible to cite 2-propenoxy.

The viscosity of the organopolysiloxane **G** is generally comprised between 50 mPa.s and 1,000,000 mPa.s at 25°C.

Preferably **G** is of formula (VII):

$$Y_jR^3_{3-j}Si\text{-}O\text{-}(SiR^3_2\text{-}O)_p\text{-}SiR^3_{3-j}Y_j \qquad (VII)$$

in which:

- Y, identical or different, represent each an hydrolysable and condensable group or a hydroxy group, and preferably are chosen in the group consisting of hydroxy, alkoxy, alkoxy-alkylene-oxy, amino, amido, acylamino, aminoxy, iminoxy, cetiminoxy, acyloxy and enoxy,
- $R^3$, identical or different, represent monovalent hydrocarbon radical comprising from 1 to 30 carbon atoms and optionally substituted by one or more halogen atoms or amino, ether, ester, epoxy, mercapto or cyano groups,
- j is 1, 2 or 3, preferably is 2 or 3, and when Y is a hydroxyl group then j = 1, and
- p is an integer equal or greater than 1, preferably p is an integer comprised between 1 and 2000.

In formula (V), (VI) and (VII), $R^1$, $R^2$ and $R^3$ are preferably:

- alkyl radicals comprising from 1 to 20 carbon atoms, optionally substituted by one or more aryl or cycloalkyl groups, by one or more halogen atoms or by amino, ether, ester, epoxy, mercapto, cyano or (poly)glycol groups. For exemple methyl, ethyl, propyl, isopropyl, butyl, pentyl, hexyl, ethyl-2 hexyle, octyle, decyl, trifluoro-3,3,3 propyl, trifluoro-4,4,4 butyl, pentafluoro-4,4,4,3,3 butyl;
- cycloalkyl and halogenocycloalkyl groups comprising from 5 to 13 carbon atoms such as cyclopentyl, cyclohexyl, methylcyclohexyl, propylcyclohexyl, difluoro-2,3 cyclobutyl, difluoro-3,4 methyl-5 cycloheptyl;
- aryl and halogenoaryl mononuclear comprising from 6 to 13 carbon atoms such as: phenyle, tolyle, xylyle, chlorophenyle, dichlorophenyle, trichlorophenyle ; or
- alcenyl radicals comprising from 2 to 8 carbon atoms such as : vinyl, allyl and butene-2 yl.

In the particular embodiment when **G** is of formula (VII) with Y of hydroxyl type, thus d is preferably 1. In this case, it is preferably to use poly(dimethylsiloxane) having terminal silanols groups (also called « alpha-omega » position).

Organopolysiloxane **G** can also be chosen in the group consisting of organopolysiloxane resins carrying at least one hydroxy or alkoxy group, groups which are either condensable or hydrolysable, which comprise at least two different siloxyl units chosen among groups of formula M, D, T and Q with:

- $M = (R^0)_3SiO_{1/2}$,
- $D = (R^0)_2SiO_{2/2}$,
- $T = R^0SiO_{3/2}$, and
- $Q = SiO_{4/2}$;

formula in which $R^0$ represents a monovalent hydrocarbon group comprising from 1 to 40 carbon atoms, and preferably from 1 to 20 carbon atoms, or a group -OR''' with R'''= H or an alkyl radical comprising from 1 to 40 carbon atoms, and preferably from 1 to 20 carbon atoms; with the condition that the resins comprise at least one motif T or Q unit.

Said resin has preferably a weight content of hydroxy or alcoxy substituants comprised between 0.1 and 10% by weight with respect to the weight of the resin, and preferably a weight content of hydroxy or alcoxy substituants comprised between 0.2 and 5% by weight with respect to the weight of the resin.

The organopolysiloxane resins have generally about 0.001 to 1.5 OH groups and/or alkoxyl per silicium atom. These organopolysiloxane resins are generally prepared by co- hydrolysis and co-condensation of chlorosilanes such as the ones of formula $(R^{19})_3SiCl$, $(R^{19})_2Si(Cl)_2$, $R^{19}Si(Cl)_3$ or $Si(Cl)_4$, radicals $R^{19}$ are identical or different and are in the group consisting of linear or branched alkyl in $C_1$ to $C_6$, phenyl and trifluoro-3,3,3 propyl.

For example, $R^{19}$ is methyl, ethyl, isopropyle, tertiobutyl and n-hexyl. Examples of resins are silicic resins of $T^{(OH)}$, $DT^{(OH)}$, $DQ^{(OH)}$, $DT^{(OH)}$, $MQ^{(OH)}$, $MDT^{(OH)}$, $MDQ^{(OH)}$ type or a mixture.

**Crosslinking agent H**

In this second embodiment, the silicone composition curable through polycondensation reaction can further comprise such crosslinking agent **H.** It is preferably an organosilicium compound carrying per molecule more than 2 hydrolysable and condensable groups linked to the silicium atoms. Such agents are well known from the skilled person and are commercially available.

The crosslinking agent **H** is preferably a silicium compound in which each molecule comprises at least 3 hydrolysable and condensable Y groups, said agent **H** having formula (VIII):

$$R^4_{(4-k)}SiY_k \qquad \text{(VIII)}$$

in which:

- $R^4$ radicals, identical or different, represent monovalent hydrocarbon radicals in $C_1$ to $C_{30}$,
- Y, identical or different, are chosen in the group consisting of alkoxy, alkoxy-alkylene-oxy, amino, amido, acylamino, aminoxy, iminoxy, cetiminoxy, acyloxy or enoxy groups, and preferably Y is an alcoxy, acyloxy, enoxy, cetiminoxy or oxime group,
- k = 2, 3 or 4, preferably k = 3 or 4.

Examples of Y groups are the same as the ones cited for **G** above when Y is an hydrolysable and condensable group. Other examples of crosslinking agent **H,** are alkoxysilanes and partial hydrolysis products of silane of formula (IX):

$$R^5_1Si(OR^6)_{(4-1)} \qquad \text{(IX)}$$

in which:

- $R^6$, identical or different, represent alkyl radical comprising from 1 to 8 carbon atoms such as methyl, ethyl, propyl, butyl, pentyl, ethyl-2 hexyl, octyl and decyl, oxyalkylenes groups in $C_3$-$C_6$,
- $R^5$, identical or different, represent a saturated or unsaturated, linear or branched aliphatic hydrocarbon group, carbocycle group, saturated or unsaturated and/or aromatic, monocycle or polycycle, and 1 is 0, 1 or 2.

Among crosslinking agent **H,** alcoxysilanes, cetiminoxysilanes, alkyl silicates and alkyl polysilicates, in which the organic radicals are alkyl radical shaving from 1 to 4 carbon atoms are preferred.

Preferably, the following crosslinking agent **H,** are used alone or in mixture:

- ethyl polysilicate and n-propyl polysilicate;
- alkoxysilanes such as dialkoxysilanes, for example dialkyldialkoxysilanes, trialkoxysilanes, for example alkyltrialkoxysilanes, and tetraalkoxysilanes, preferably propyltrimethoxysilane, methyltrimethoxysilane, methyltriethoxysilane, ethyltrimethoxysilane, ethyltriethoxysilane, isobutyltrimethoxysilane, isobutyltriethoxysilane, propyltriethoxysilane, tetramethoxysilane, tetraethoxysilane, tetrapropoxysilane, tetrabutoxysilane, 1,2 bis(trimethoxysilyl)ethane, 1,2-bis(triethoxysilyl)ethane, tetra-isopropoxysilane, phenyltriethoxysilane, phenyltrimethoxysilane, vinyltriethoxysilane, vinyltrimethoxysilane and those of following formula: $CH_2=CHSi(OCH_2CH_2OCH_3)_3$ , $[CH_3][OCH(CH_3)CH_2OCH_3]Si[OCH_3]_2$, $Si(OC_2H_4OCH_3)_4$ et $CH_3Si(OC_2H_4OCH_3)_3$,
- acyloxysilanes such as the following acetoxysilanes: tetraacetoxysilane, methyltriacetoxysilane, ethyltriacetoxysilane, vinyltriacetoxysilane, propyltriacétoxysilane butyltriacetoxysilane, phenyltriacetoxysilane, octyltriacetoxysilane, dimethyldiacetoxysilane, phenylmethyldiacetoxysilane, vinylmethyldiacetoxysilane, diphenyldiacetoxysilane and tetraacetoxysilane,
- silanes comprising alkoxy and acetoxy groups such as: methyldiacetoxymethoxysilane, methylacetoxydimethoxysilane, vinyl diacetoxymethoxysilane, vinylacetoxydimethoxysilane, methyldiacetoxyethoxysilane and methylacetoxydiethoxysilane,
- methyltris(methylethyl-cetoximo)silane, 3-cyanopropyltrimethoxysilane, 3-cyanopropyl-triethoxysilane, 3-(glycidyloxy)propyltriethoxysilane, vinyltris(methylethylcetoximo)silane, tetra-kis(methylethylcetoximo)silane.

Generally, from 0.1 to 60 parts by weight of crosslinking agent **H** are used for 100 parts by weight of polyorganosiloxane **G.** Preferably, 0.5 to 15 parts by weight of crosslinking agent **H** are used for 100 parts by weight of polyorganosiloxane **G.**

**Polycondensation catalyst**

The polycondensation catalyst can be a tin, zinc, iron, zirconium, bismuth or titanium derivative or an organic compound as amine or guanidine as disclosed for example in EP2268743 and EP2222688. Use may be made, as tin-derived condensation catalyst, of tin monocarboxylates and dicarboxylates, such as tin 2-ethylhexanoate, dibutyltin dilaurate or dibutyltin diacetate (see the work by Noll, "Chemistry and Technology of Silicone", page 337, Academic Press, 1968, 2nd edition, or the patents EP 147 323 or EP 235 049). Other possible metal derivatives include chelates, for example dibutyltin acetoacetonate, sulfonates, alcoholates, etc.

**Other additives**

The curable silicone composition **X** precursor of the silicone elastomer article, curable either by polycondensation or by polyaddition, can further comprise functional additives usual in silicone composition. The following functional families of additives can be cited:

- adhesion promoter;
- silicon resins;
- thixotropic agents,
- color agent and
- additives for thermal resistance, oil resistance and fire resistance, for example metallic oxides.

**Adhesion promoters** are largely used in silicone composition. Advantageously, in the process according to the invention it is possible to use one or adhesion promoter chosen in the group consisting of:

- alkoxylated organosilanes comprising, per molecule, at least one $C_2$-$C_6$ alkenyl group,

- organosilicate compounds comprising at least an epoxy radical
- chelates of metal M and/or metallic alkoxydes of formula:

M(OJ)n,

in which:

M is chosen in the group consisting of: Ti, Zr, Ge, Li, Mn, Fe, Al and Mg or their mixtures,
n = valence of M and J = linear or branched alkyl in $C_1$-$C_8$,

Preferably M is chosen in the group consisting of: Ti, Zr, Ge, Li or Mn, and more preferably M is Titane. It is possible to associate for example an alkoxy radical of butoxy type.

**Silicon resins** are branched organopolysiloxanes well known and commercially available. They present, in their structure, at least two different units chosen among those of formula $R_3SiO_{1/2}$ (M unit), $R_2SiO_{2/2}$ (D unit), $RSiO_{3/2}$ (T unit) and $SiO_{4/2}$ (Q unit), at least one of these units being a T or Q unit.

Radical R are identical or different and chosen in the group consisting in alkyl linear or branched in C1 - C6, hydroxyl, phenyl, trifluoro-3,3,3 propyl. Alkyl radicals are for example methyl, ethyl, isopropyl, tertiobutyl and n-hexyl.

As examples of branched oligomers or organopolysiloxanes polymers, there can be cited MQ resins, MDQ resins, TD resins and MDT resins, the hydroxyl functions can be carried by M, D and/or T units. As examples of resins that are particularly well suited, there can be cited hydroxylated MDQ resin having from 0.2 to 10% by weight of hydroxyl group.

The following examples are intended to illustrate and not to limit the invention.

## EXAMPLES

Manufacture of a three-dimensional article made of a cured material using a 3D printer prepared from curable silicone compositions using an extrusion 3D printer Delta Tower, according with disclosure.

### Raw materials

The symbol "Vi" is a vinyl group ($-CH=CH_2$).

The symbol "Me" is a methyl group ($-CH_3$)

### LSR Composition 1

A mixer is loaded with:

- 29 parts dimethylpolysiloxane oil blocked at both ends by $Me_2ViSiO_{1/2}$ units, having a viscosity of 60,000 mPa.s
- 29 parts of a dimethylpolysiloxane blocked at both ends by $Me_2ViSiO_{1/2}$ units, having a viscosity of 100,000 mPa.s
- 26 parts of silica fumed with a specific surface area measured by the BET method of 300 $m^2/g$ and 7 parts of hexamethyldisilazane.

The whole mixture is heated at 70°C under agitation for 1 hour and is devolatilized, cooled and stored as "Base 1" of the composition 1.

To 45 parts of this Base 1 is then added in a speed mixer:

- Platinum metal which is introduced in the form of an organometallic complex at 10% by weight of Platinum metal, known as Karstedt's catalyst diluted in a vinyl oil.
- 3 parts: dimethylpolysiloxane oil having vinyl groups in the chain and at the chain ends and having a viscosity of 1,000 mPa.s
- 2 parts of a dimethylpolysiloxane oil having vinyl groups in the chain and at the chain ends and having a viscosity of 400 mPa.s

The composition called LSR composition 1 part A is mixed during one minute at 1,000 rounds per minute in the speed mixer. The Pt content is 5 ppm.

To 45 parts of this Base 1 is then added in a speed mixer:

- 1.3 parts of an organohydrogenopolysiloxane M'Q resin comprising Si-H groups located in M units (M');
- 0.5 parts of a linear organohydrogenopolysiloxane comprising Si- H groups in the chain and at chain ends and containing approximately 20% by weight of groups Si- H
- 1.5 parts of a dimethylpolysiloxane oil having vinyl groups in the chain and at the chain ends and having a viscosity of 400 mPa.s
- 1.6 parts: dimethylpolysiloxane oil having vinyl groups in the chain and at the chain ends and having a viscosity of 1000 mPa.s
- 0.08 parts of ethynyl-1-cyclohexanol-1 as curing inhibitor.

The composition called LSR composition 1-part B is mixed during one minute at 1,000 rounds per/minute in the speed mixer.

**RTV2 Composition 2** is prepared by mixing each component during one minute at 1,000 rounds per minute in the speed mixer.

| | Part A | Part B |
|---|---|---|
| Dimethylpolysiloxane oil blocked at both ends by $Me_2ViSiO_{1/2}$ units, having a viscosity of 800 mPa.s | 52.8 | 50.5 |
| Fumed silica treated with hexamethyldisilazane | 27.2 | 26.57 |
| Dimethylpolysiloxane oil blocked at both ends by $Me_3SiO_{1/2}$ units, having a viscosity of 50 mPa.s | 20 | 11.7 |
| Linear organohydrogenopolysiloxane comprising Si-H groups in the chain and at chain ends and containing approximately 6% by weight of groups Si-H | --- | 10.3 |
| Blue pigment base | --- | 0.3 |
| Organometallic complex at 10% by weight of Platinum metal (Karstedt's catalyst) diluted in a vinyl oil | 0.025 | ---- |
| Ethynyl-1-cyclohexanol-1 as curing inhibitor | ---- | 0.6 |

**Support material composition for 3D printing**

**Support 1 preparation**

A support material composition comprising 10 wt. % of nanoclay and 40 wt.% of glycerol in water is prepared as follows: 20 g of Laponite XLG are added by successive additions of amounts of 5g to a plastic beaker comprising 80 g of glycerol and 100g of demineralized water. The Laponite is mixed with a spatula between each addition in order to limit the formation of aggregates. After all the Laponite has been added, the resulting mixture is mixed 3 times using a speed mixer at room temperature, each cycle having the following parameters: 10s at 500 r/min; 10s at 1,000 r/min, 10s at 1500 r/min; 10s at 2,000 r/min; 10s at 2,500 r/min and finally 12 seconds at 2,750 r/min.

The resulting transparent support material composition is then put in a cartridge and used for the 3D-printing.

**Support 2 preparation**

A second example of the invention is done by using 14% wt. of nanoclay, 48%wt. of glycerol and 16% wt. of Pluronic 127 ((A difunctional block copolymer surfactant terminating in primary hydroxyl groups)

**Comparative Supports**

**Comparative support 1**

A first comparative example is done by replacing the glycerol by polyethylene glycol (Mw=400). The transparent comparative support material composition is then put in a cartridge and used for the 3D-printing

**Comparative support 2**

A second comparative example is done by replacing the glycerol by a blend with a ratio 1/1 wt./wt. of polyethylene glycol (Mw=400) and Pluronic 127 (A difunctional block copolymer surfactant terminating in primary hydroxyl groups). The resulting non-transparent material composition is then put in a cartridge and used for the 3D-printing

**Comparative support 3**

A third comparative example is done by replacing the glycerol by Pluronic 127. The non-transparent white comparative support material composition is then put in a cartridge and used for the 3D-printing

**Properties of the support material compositions**

The viscosities of the obtained compositions have been determined at different shear rates at 25°C, using a Haake MARS III rheometer (cone-plate of 2° and diameter of 20 mm at 25°C, GAP = 100 μm). The results are presented in Table 1.

Table 1: viscosity (in Pa.s) or the different support material compositions in function or the shear rate applied

| Shear Rate ($s^{-1}$) | Comparative Support 1 | Comparative Support 2 | Comparative Support3 | Support 1 | Support 2 |
|---|---|---|---|---|---|
| 0.01 $s^{-1}$ | 124000 | 45900 | 197000 | 55100 | 14800 |
| 01 $s^{-1}$ | 32000 | 10500 | 33000 | 25000 | 5140 |
| 1 $s^{-1}$ | 3520 | 1480 | 3040 | 2300 | 1710 |
| 10 $s^{-1}$ | 152 | 167 | 418 | 205 | 300 |

Starting from 10 wt. % of laponite in the composition, when no or low shear rate is applied, the compositions have a high viscosity (more than 500 Pa.s), the compositions are thus in a gel state. Furthermore, when a high shear rate is applied, the viscosities of the compositions are greatly lowered and drop below 500 Pa.s. The compositions are then in a liquid state and can therefore be used for the printing of the support.

Nevertheless the viscosities at low shear rate (0.01$s^{-1}$) of comparative example 1 and comparative example 3 have high viscosities >100000 Pa.s such as such comparative materials cannot be pushed without shearing

The viscosities of the different support material compositions have also been measured at low shear rate (0.5 $s^{-1}$) initially and after letting the compositions, sheared at 25 $s^{-1}$, rest for 90 s, which is the estimated average time before the print head prints another layer on top of the support material composition. The results are presented in table 2.

Table 2: Viscosities (in Pa.s) of the different support material compositions after letting the compositions sheared at 25 $s^{-1}$ rest for 90 s.

| Shear Rate ($s^{-1}$) after 90 s rest | Comparative Support 1 | Comparative Support 2 | Comparative Support 3 | Support 1 | Support 2 |
|---|---|---|---|---|---|
| Initial 0.5s-1 | 4050 | 2800 | 6530 | 3900 | 4280 |
| Recovery 0.5 $s^{-1}$ | 1080 | 2170 | 5250 | 3010 | 3030 |

Except comparative example 1 with polyethylene glycol (Mw400) the results show that the viscosities of the different support material compositions increase rapidly after stopping the shear stress. Starting from 10 and 14 wt.% of nanoclay, the support material compositions have properties suitable for the 3D printing of a silicone elastomer article when using an organic compound according to the invention.

The water retention of each gel is also important in order to avoid volumic shrinkage of the gel during 3D printing. Measurements of the loss of water were done for each composition during at least 48 hours. 40g of each composition were placed in aluminium cup of 6cm diameter and with a height of 1cm.

The results are presented in Table 3.

Table 3: Loss of water in wt.% of the different compositions stored at 30°C and 50% relative humidity

| Hours | Comparative Support 1 | Comparative Support 2 | Comparative Support 3 | Support 1 | Support 2 |
|---|---|---|---|---|---|
| 0 | 0 | 0 | 0 | 0 | 0 |
| 8 | 3,5 | 3,1 | 4,1 | 2 | 0,4 |
| 24 | 9,0 | 9,2 | 10,4 | 6,5 | 0,5 |
| 48 | 15,5 | 16,4 | 17,6 | 12,2 | 1,1 |

The compositions of the invention have low loss of water which reveals a better behaviour during 3D printing with low shrinkage than comparative composition examples with higher shrinkage.

**3D-Printing**

**LSR Composition 1**

The 3D printing has been done using a Delta Tower 3D printer comprising a 1-component Viscotec dosage system for the support and a 2-components Viscotec dosage system equipped with a static mixer for the 2-components silicone composition.

The cartridges comprising the support material composition having 14 wt. % laponite and 48% of glycerol of example 2 is installed on the 1-component Viscotec dosage system with a static pressure of 1 bar and a nozzle of 500 $\mu$m.

Part A and part B of the LSR composition 1 are each put in a cartridge adapted to the 2-component Viscotec dosage system and put under 3 bars of pressure. The mixture of part A and part B of the LSR composition 1 in a 50/50 ratio is performed using a static mixer of 16 stages attached to a nozzle of 500 $\mu$m.

A supported model with 90° overhangs (parallelipedic structure of 30mmlength xlcm height and 1cm width) is then printed with a speed of 10 mm/s. The print heads successively printed each layer of support composition material and each layer of silicone composition.

The support material of the invention shows a shrinkage lower than 2% which is measured separately on a 3D print parallelipedic structure of 30mmlength xlcm height and 1cm width.

The curable silicone composition precursor of the cured silicone material is cured at 70°C for one hour and then 150°C for 10 minutes in an oven. The support material did not adhere to the cured silicone material, resists to the cure at 70°C and was easily removed mechanically by brushing after post cure 150°C. The recovered nanoclay, glycerol dispersion can be lyophilized and used again.

RTV-2 Composition 2

An actuator was printed using parts A and B of the RTV2 Composition 2 and a support material composition having 10 wt. % laponite. The actuator has been printed using the protocol mentioned above for the LSR composition 1.

The support material was removed by immersion in water (10 parts of water for 1 part of support material composition).

The printed silicone actuator has the same mechanical properties as an injected silicone actuator. The printed silicone actuator has a shore A hardness of 22.5 measured on separated printed cylinders of 6 mm thickness at 23 °C and 50% relative humidity prepared by additive manufacturing with support (on top and below) of 6 mm thickness.

**Claims**

**1.** A gel-like support material **A** useful for an additive manufacturing method, the material being prepared by mixing components of a composition **V** comprising:

(a) for 100 parts by weight of at least one organic compound having at least two hydroxyls groups bound to carbon atoms with the proviso that at least one hydroxyl group is a secondary alcohol,
(b) from 1 part to 50 parts by weight, and preferably from 10 parts to 40 parts by weight, of at least one nanoclay,
(c) from 1 part to 100 parts by weight, and preferably from 10 parts to 80 parts by weight, of water,
(d) from 0 part to 100 parts by weight of at least one water soluble or water dispersible polymer, and
(e) from 0 part to 20 parts by weight of at least one additive.

2. The gel-like support material **A** according to claim 1 wherein the organic compound (a) has from 2 to 20 hydroxyl groups bound to carbon atoms with the proviso that at least one hydroxyl group is a secondary alcohol.

3. The gel-like support material **A** according to claim 1 wherein the organic compound (a) has from 2 to 20 hydroxyl groups bound to carbon atoms with the proviso that:

   • at least one hydroxyl group is a secondary alcohol when the compound is linear; or
   • at least two hydroxyl groups are secondary alcohols when the compound comprises at least one cyclic ring.

4. The gel-like support material **A** of claim 1, wherein the organic compound (a) is selected from the group consisting of glycerol, diglycerol, triglycerol, tetraglycerol, polyglycerols, erythritol, xylitol, arabitol, ribitol, sorbitol, dulcitol, mannitol, maltitol, isomaltitol, lactitol, isosorbide and their blends.

5. The gel-like support material **A** of claim 1, wherein the organic compound (a) is selected from the group consisting of saccharose, fructose, glucose, maltose, their oligomers and their blends.

6. The gel-like support material **A** of claim 1, wherein the gel-like support material **A** has a viscosity less than or equal to 500 Pa.s at a shear rate of 10 $s^{-1}$ at 25°C, and a viscosity more than or equal to 500 Pa.s and lower than 100,000 Pa.s at a shear rate of 0.01 $s^{-1}$ at 25°C.

7. The gel-like support material **A** of claim 1, wherein the nanoclay (b) is selected from the group consisting of kaolin-serpentines, preferably selected from the group consisting of halloysite and kaolinite; smectites, preferably selected from the group consisting of montmorillonite, hectorite and laponite, bentonites; and mixtures thereof.

8. The gel-like support material **A** according to any of claim 1 wherein the nanoclay (b) is selected from smectites, preferably from the group consisting of saponite, hectorite, sauconite, stevensite, swinefordite, montmorillonite, beidellite, nontronite, volkonskoite fluorohactite, laponite and mixtures thereof.

9. The gel-like support material **A** according to claim 1 wherein the additive (e) is selected from the group consisting of: a rheological additive, a coloring agent; a pH buffer; an antimicrobial agent; a dispersing agent, a surfactant, a functional additive and mixtures thereof.

10. A method of additive manufacture of a three-dimensional article made of a cured material using a 3D printer and the gel-like support material **A** as defined in anyone of the preceding claims, said method comprising the steps of:

    1) printing at least one part of a curable precursor of a cured material to provide a printed part of said curable composition,
    2) printing at least one part of the gel-like support material **A** according to the invention and as described below, for providing a supporting structure for preventing distortions and collapses within printed parts of said curable composition,

    steps 1) and 2) being done simultaneously or successively in any order;

    3) optionally repeating step 1) and/or step 2); and
    4) allowing the curable composition to cure, optionally by heating, to obtain the three-dimensional article made of a cured material.

11. The method according to claim 10, wherein the 3D printer is an extrusion 3D printer or a 3D jetting printer.

12. The method according to claim 10, wherein the method further comprises a step 5) consisting of removing the gel-like support material **A** by mechanical means, by dissolution in a solvent, preferably by dissolution in water, by use of pressurized water or by immersion in an ultrasonic bath.

13. The method according to claim 12, wherein the method further comprises a final step 6) wherein the three-dimensional article made of a cured material undergoes a mechanical post-treatment, a chemical post-treatment and/or a thermal post-treatment.

14. The method according to claim 10, wherein the curable composition precursor of a material is a curable silicone

composition precursor of a cured silicone material.

**15.** Use of the gel-like support material **A** as defined in anyone of claims 1 to 9 in additive manufacturing methods.

Europäisches Patentamt
European Patent Office
Office européen des brevets

# EUROPEAN SEARCH REPORT

Application Number
EP 21 02 0051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAMIDI ARMITA ET AL: "3D printing of very soft elastomer and sacrificial carbohydrate glass/elastomer structures for robotic applications", MATERIALS & DESIGN, ELSEVIER, AMSTERDAM, NL, vol. 187, 19 November 2019 (2019-11-19), XP085977223, ISSN: 0264-1275, DOI: 10.1016/J.MATDES.2019.108324 [retrieved on 2019-11-19] * Section 2. Materials and 3D printer setup * ----- | 1-15 | INV. C08L83/04 B29C64/40 C08L71/02 |
| A | CN 110 103 463 A (UNIV HUAZHONG SCIENCE TECH) 9 August 2019 (2019-08-09) * claim 1 * ----- | 1-15 | |
| A | US 2017/283596 A1 (SAITO TOMOHIRO [JP] ET AL) 5 October 2017 (2017-10-05) * paragraph [0025] - paragraph [0025] * ----- | 1-15 | |

TECHNICAL FIELDS SEARCHED (IPC)

C08L
B29C
C09J

The present search report has been drawn up for all claims

| Place of search | Date of completion of the search | Examiner |
|---|---|---|
| The Hague | 19 July 2021 | Stinchcombe, John |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 02 0051

This annex lists the patent family members relating to the patent documents cited in the above-mentioned European search report. The members are as contained in the European Patent Office EDP file on
The European Patent Office is in no way liable for these particulars which are merely given for the purpose of information.

19-07-2021

| Patent document cited in search report | Publication date | Patent family member(s) | Publication date |
| --- | --- | --- | --- |
| CN 110103463 A | 09-08-2019 | NONE | |
| US 2017283596 A1 | 05-10-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150028523 A
- US 20180036953 A
- WO 2020127882 A
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 2372874 A
- EP 2268743 A
- EP 2222688 A
- EP 147323 A
- EP 235049 A

### Non-patent literature cited in the description

- **NOLL.** Chemistry and Technology of Silicone. Academic Press, 1968, 337